# EUROPEAN PATENT APPLICATION

(11) **EP 4 737 767 A1**
(43) Date of publication of application: **06.05.2026**
(21) Application number: 25209722.5
(22) Date of filing: 20.10.2025
(51) Int. Cl.: F16H 37/04, B60K 1/02

(54) **ELECTRIC DRIVE AXLE FOR INDUSTRIAL OR COMMERCIAL VEHICLE**

(30) Priority: 31.10.2024 IT 202400024495
(71) Applicant: FPT Industrial S.p.A., 10156 Torino (IT)
(72) Inventor: PESOLA, Fabio, 10156 Torino (IT); ESPOSITO, Pietro, 10156 Torino (IT); CANTONE, Francesco, 10156 Torino (IT); TESSITORE, Marco, 10156 Torino (IT)
(74) Representative: Fiume, Orazio

(57) **Abstract**

Electric axle (EA) for industrial or commercial vehicles comprising a differential (DIF) equipped with an input port and half-shafts (HS) to rotate corresponding vehicle wheels (W), a first electric machine (EM1, EM2) having a drive shaft, a transmission comprising: an epicyclic gear train (PG) coaxial with said half-shafts (HS) and comprising a single output port (SC) coinciding with said input port of the differential, a first input port (M1, S) and a second input port (M3, SC) selectively connectable to a first hollow shaft (S2) coaxial with said half-shafts (HS), wherein said first and second input ports are selectable by means of a first selection device (CL1) and wherein said first shaft (S2) is operably connectable to said first electric machine by means of a second selection device (CL2).

## Description

### Field of the invention

The present invention relates to the field of electric propulsion systems, particularly in the field of industrial and commercial vehicles equipped with single or dual electric motor electric axle drives.

The electric axle drive of the present invention belongs to the category of axles known as off-axis, in that the rotation axis of one or more electric propulsion machines is parallel but not coaxial with the axle shafts that define the axle.

### State of the art

Commercial and industrial vehicles are undergoing a massive electrification process, replacing internal combustion engines or integrating them with electric motors. Industrial and commercial vehicles are designed to maximize cargo space, so one of the key aspects is the design of compact and robust drive axles.

Furthermore, it must be considered that these vehicles require significant torque/power, and to achieve this torque/power, it is necessary to provide transmissions that guarantee a significant gear ratio or the use of two electric motors.

It is therefore not easy to balance compactness and a high gear ratio, or the arrangement of two electric motors and the transmission, with respect to vehicle constraints. More specifically, in the field of industrial and commercial vehicles, a high efficiency of the axle is required at motorway speeds, i.e. when there is a low reduction ratio between the shaft of the electric motors and the wheel hubs, limiting as much as possible the number of meshing wheels in this specific driving condition and therefore the losses due to the transmission of torque between the gear wheels involved in the meshing.

### Summary of the invention

The purpose of this invention is to present a particularly compact, single- or dual-motor electric axle drive for industrial or commercial vehicles, capable of ensuring a high reduction ratio in one operating condition and high efficiency in another operating condition, when the reduction ratio is low.

The basic idea of this invention is to implement a transmission comprising a planetary gearset as a final reduction stage connected to a differential, in which the planetary gearset is coaxial with the axle. The planetary gearset has two distinct inputs and an output operationally connected to the input of the axle differential. A hollow shaft, coaxial with the planetary gearset, can be selectively connected to one of the two inputs of the planetary gearset by means of a first selection device.

A first additional shaft supports a pair of gear wheels that can be selectively connected to the same additional drive shaft via a second additional selection device to transmit motion to the hollow shaft.

Advantageously, at least four gears can be achieved.

The axle drive can be equipped with an additional electric motor and a respective second additional drive shaft with a respective third additional selection device to transmit motion to the hollow shaft.

Advantageously, the axle drive can achieve a minimum of four gears and a maximum of eight gears if configured with two electric motors.

The dependent claims describe preferred variants of the invention and form an integral part of this specification.

### Brief description of the figures

Further purposes and advantages of the present invention will become clear from the following detailed description of an embodiment thereof (and its variants) and the accompanying drawings, provided purely for explanatory and non-limiting purposes, in which:
Figure 1 shows an example of a drive axle arrangement that is the subject of the present invention;
Figure 2 shows a variant of the arrangement of Figure 1 in which the control of a selection device is moved to a more accessible position than in the arrangement of Figure 1;
Figure 3 shows a solution, based on the arrangement of Figure 2, in which two electric machines are implemented;
Figures 4 and 5 show further variants of the invention in which the drive shaft is equipped with a pair of pinions.

The same reference numbers and letters in the figures identify the same elements or components or functions.

It should also be noted that the terms "first," "second," "third," "upper," "lower," and the like may be used here to distinguish various elements. These terms do not imply a spatial, sequential, or hierarchical order for the modified elements unless specifically indicated or implied by the text.

The elements and features illustrated in the various preferred embodiments, including the drawings, may be combined without departing from the scope of protection of this application as described below.

### Detailed description of preferred embodiments

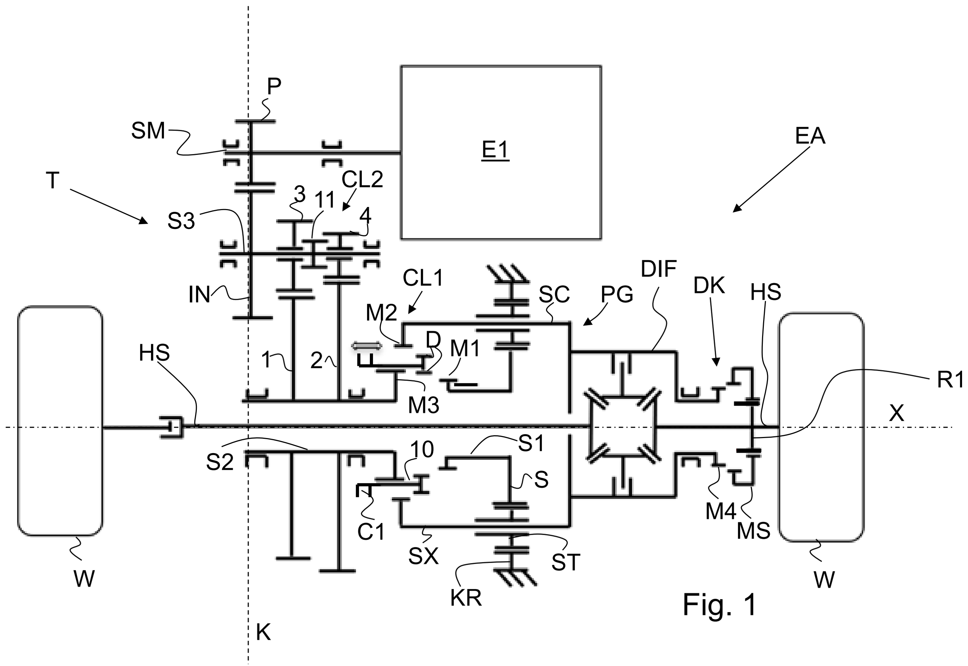

Figure 1 shows a preferred layout of the EA electric axle drive of the present invention.

The axle is defined by the two half-shafts HS arranged to rotate their respective wheels W.

The half-shafts are connected to the differential DIF, for rotational drive.

A planetary gear PG is configured coaxially with one of the half-shafts HS. The planetary carrier SC is operationally connected to the input of the differential DIF and, in particular, is connected to the differential housing or is made integral with it.

The planetary carrier is fitted with planetary gears ST, preferably at least three, arranged to mesh
- on an internally toothed ring gear KR fixed to a casing (not shown) of the electric axle EA and
- on a sun gear S.

The sun gear and the planetary carrier define two distinct inputs of the planetary gear.

In the above-described planetary gear configuration, the rotation of the sun gear achieves the maximum possible reduction ratio generated by the combination of the number of crown and sun gear teeth between the input on the sun gear S and the output on the planet carrier SC.

The planetary gear is coaxial with the half-shafts, as the corresponding sun gear S and the planet carrier SC are configured to rotate around an X-axis coaxial with the half-shafts HS.

Since the planet carrier simultaneously defines an additional input with respect to the sun gear S and the only output of the planetary gear, this means that when the planet carrier is selected as the input, it is equivalent to bypassing the planetary gear, i.e., without any change in the transmission ratio due to the planetary gear PG itself between the input speed of the planetary gear PG and the output speed associated with the differential housing DIF.

The sun gear S is mounted on a hollow shaft S1 coaxial with one of the half-shafts HS.

The satellite carrier also defines, at least partially, a hollow shaft SX, coaxial and external to shaft S1.

A hub M2 is connected to the satellite carrier.

A hub M1 is fixed to the hollow shaft S1, so that the sun gear S is driven into rotation by the hub M1.

A hub M2 is fixed to the satellite carrier SC, so that the satellite carrier SC is driven into rotation by the hub M2. Shaft S2, hollow and coaxial with axle shaft HS, comprises, at one end, hub M3, to which is coupled the torque distribution sleeve 10, which slides axially with respect to hub M3, by means of a splined coupling between hub M3 and sleeve 10.

Sliding sleeve 10 supports two teeth D designed to selectively engage hub M1 or hub M2, or to create a neutral condition, in which neither hub M1 nor M2 engages with respect to shaft S2.

Therefore, the sliding sleeve, together with hubs M1, M2, and shaft S2, defines a first selection device CL1.

This neutral condition of the CL1 control allows the vehicle towing function, effectively disconnecting the rotation of the electric machine and all gears upstream of the selection device CL1. This neutral condition can also be exploited to enable the engine and transmission gears to "sail" by disconnecting them from the rotation of the wheels, thus effectively increasing the efficiency of the axle drive and reducing energy losses due to the smaller number of rotating components.

A first and second transmission ratio are achieved via the first selection device. Obviously, when sleeve 10 engages hub M2 associated with the planetary gear carrier, the epicyclic gear set is bypassed, therefore, shaft S2 is directly connected to the differential. Conversely, a reduction is achieved when sleeve 10 engages hub M1 in one piece with sun gear S, as the epicyclic gear set achieves this reduction when torque enters from the sun gear.

In particular, in the variant shown in Figure 1, the sliding sleeve 10 has a first internal toothing D designed to engage the hub M1, and a second external toothing D, designed to engage the hub M2.

The sliding sleeve 10 is slidably coupled, by means of a splined coupling, to the hub M3, which is integral with the hollow shaft S2 and equipped with external splined teeth complementary to the internal splined teeth of the sliding sleeve.

Both the shaft S2 and the sliding sleeve 10 are coaxial and annular with respect to the axle shaft HS.

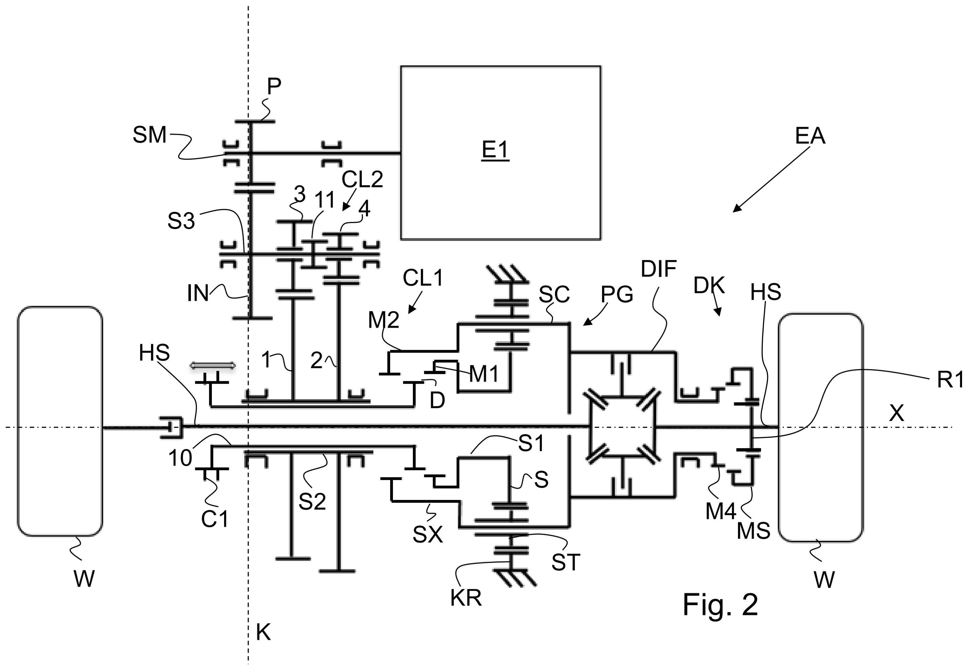

In the variant shown in Figure 2, the sliding sleeve is equipped with a single external toothing D designed to engage the hubs M1 and M2.

The hubs M1 and M2 are both equipped with internal teeth, so that the sliding sleeve 10, with the same toothing D, can selectively engage one of the teeth of the hubs M1 and M2.

The solution shown in Figure 2 also differs from the solution shown in Figure 1 in another way: the sliding sleeve 10 is fitted internally to shaft S2 and coupled to it by means of a splined coupling that rotates between sleeve 10 and shaft S2, leaving sleeve 10 free to move axially within itself relative to shaft S2. Both shaft S2 and the sliding sleeve 10 are coaxial and annular with respect to the axle shaft HS.

Advantageously, this solution allows for remote control of the first selection device, in that the collar C1 is located on the periphery of the transmission and in an intermediate position between the closest wheel W and shaft S2 for easy access, while the differential DIF is located proximal to the other vehicle wheel. It is, in fact, easier to arrange and maintain an actuator for controlling collar C1.

In other words, the control collar C1 is arranged so as to be the only transmission element between the shaft S2 and a vehicle wheel W.

Considering the plane K shown in Figure 1, the collar C1 is located in the half-space opposite the electric machine E1 and the epicyclic gear train. More specifically, the collar C1 is also located in the half-space opposite the wheels 1, 2, 3, and 4 described below.

The sequence, from left to right on the sheet, is:
- vehicle wheel W,
- control collar C1,
- shaft S2,
- epicyclic gear train,
- differential DIF,
- optional differential lock DK,
- vehicle wheel W.

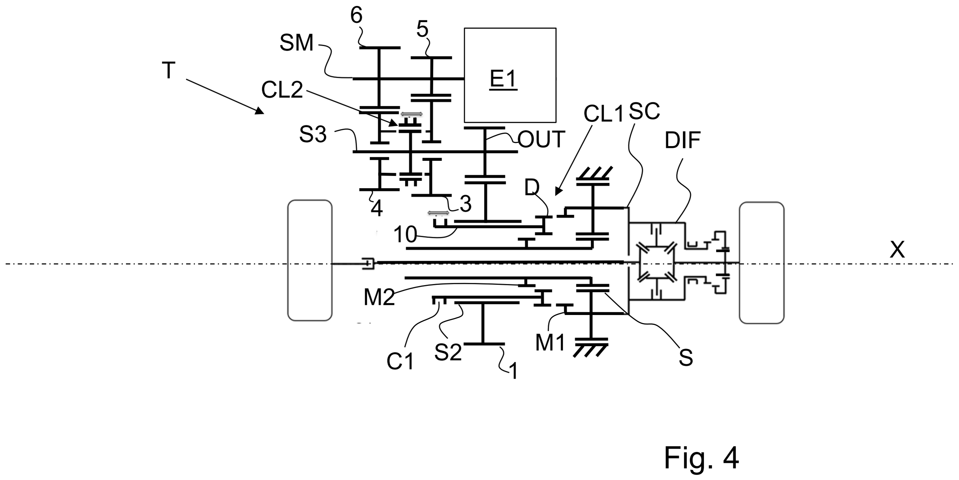

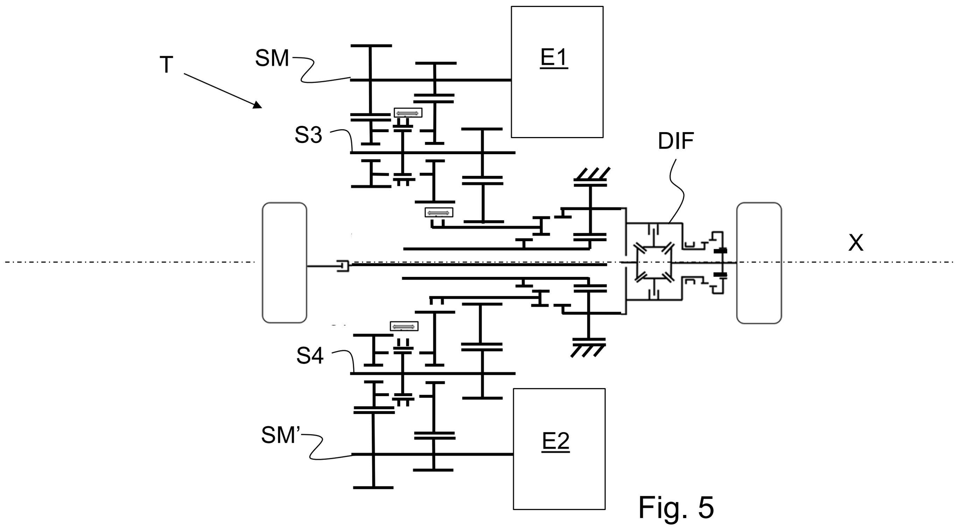

Shaft S2, together with shaft S3, defines a gearbox, capable of defining two additional gears, which evidently combine with the two gears selectable by the first selection device CL1. In contrast, see Figures 4 and 5. Shaft S2 is simply a hollow shaft that does not define a gearbox per se, as it only supports gear wheel 1.

Shaft S2 supports, as shown in Figures 1-3, a pair of secondary gears 1 and 2 fixed to the secondary shaft.

Shaft S2 receives its drive from a primary shaft S3 equipped with a pair of primary gears 3 and 4, rotatably associated with the primary shaft and selectively fixed to the primary shaft by means of a second selection device CL2. Each of the two primary gears is arranged to mesh with one of the secondary gears 1 and 2 of the secondary shaft, respectively.

Although the second selection device CL2 operates on primary wheels 3 and 4, opening the selection device CL2 causes the drive shaft SM to be disconnected from the first shaft S2. Therefore, the first shaft S2 can be connected to the drive shaft SM via the second selection device CL2. This also applies to the third selection device CL3 in relation to the second electric machine E2.

The second selection device can have any shape and nature. For example, it can include a non-absolute quick-coupling system with front or radial teeth called a "dog clutch," allowing wheel 3 or 4 to be selected alternately and making it integral for rotation with shaft S3.

Alternatively, the second selection device can consist of an absolute synchronizer clutch with single or multiple cones, or any type of selection and clutch device combined with any type of actuation means, such as mechanical, hydraulic, pneumatic, electromechanical, or electromagnetic.

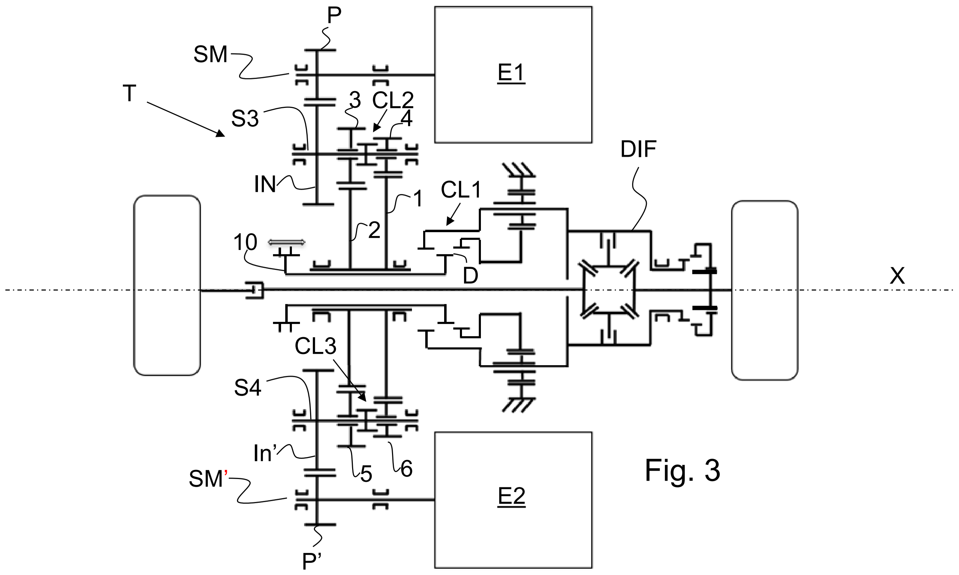

This selection and engagement device can be implemented coaxially on the outside of shaft S3 or inside shaft S3 itself using a hollow shaft solution according to the same remote control technique shown in Figures 2 and 3 below regarding shaft S2 and the corresponding sliding sleeve 10. Shaft S3 can be connected to the motor shaft SM of electric machine E1 using an axial joint, so they, shaft S3, and motor shaft SM are coaxial. This solution is not shown in the figures.

The motor shaft of electric machine E1 is preferably equipped with a pinion P that meshes with a gear IN fixed to shaft S3. Thus, shaft S3 and the motor shaft of the electric machine are parallel but not coaxial, and a first transmission ratio is therefore created between the two. Preferably, according to Figures 1 and 2, the input gear IN of the intermediate shaft and the pinion P define the aforementioned plane K. Gears 1 and 2, keyed to shaft S3, and the differential DIF are located in the same half-space defined by the plane K.

It is worth noting that the input gear IN can be associated with shaft S3, at the opposite end to that shown in Figures 1 and 2. This means that wheels 3 and 4 are housed in a first half-space, while the electric motor is housed in the second half-space opposite to the first.

According to the present invention, the epicyclic gear train configured at its maximum reduction ratio as first gear is advantageously used in combination with wheels 1 or 2 with the highest reduction ratio to achieve the maximum total reduction ratio when the vehicle is stationary or nearly stationary, thus obtaining high drive torque at the wheels when the vehicle starts. Conversely, at highway speeds, the planetary gear train is bypassed, as the torque passes directly through the planetary carrier, significantly reducing losses due to the number of gears meshing with each other. This defines the gear with the lowest reduction ratio in combination with gear 1 or 2 with the lowest reduction ratio, resulting in high system efficiency due to the minimal number of rotating elements in this configuration.

Referring to Figure 3, the axle can be equipped with a dual electric motor and symmetrically, in the sense that the second electric motor E2 is connected to the common differential DIF via a second primary shaft S4, schematically identical or similar to the primary shaft S3 described above.

Obviously, the transmission wheels 5 and 6 of the second shaft S4 are operationally associated with wheels 2 and 1, which can be connected to the rotation via the selection device CL3 to the planetary gear set PG and differential DIF, which is common to the two electric motors EM1 and EM2. However, the transmission ratios created by the S4 shaft together with the wheels 3 and 4 of the common S2 shaft can be different from those defined by the S3 shaft, allowing for the creation of up to eight transmission ratios in total (2+2) x 2 = 8 total and distinct transmission ratios.

If, however, the transmission ratios between wheels 1-4-6 and wheels 2-3-5 were equal, there would be a total of 2 x 2 = 4 distinct transmission ratios.

When the axle includes two electric machines E1 and E2, the presence of the selection devices CL2, CL3 on the respective shafts S3 and S4 allows the two electric machines to drive simultaneously or only one of the two electric machines to drive, leaving the other disconnected. This function can ensure not only greater transmission efficiency, for example, in low-power highway driving, but also propulsion in the event of a failure of one of the two electric machines by disconnecting the faulty electric machine.

It is worth noting that a differentiation between the transmission ratios achievable by the first electric machine and the second electric machine can be achieved by varying the diameters of the pinion coupling P'/input wheel IN' of the second secondary shaft.

In other words, shaft S3 and shaft S4 have identical gears 3, 4, and 5, 6, respectively, but they express different transmission ratios because the P/IN and P'/IN' ratios are different.

Another way to differentiate the transmission ratios is to differentiate the meshing center distances between shafts S2/S3 and S4/S1.

It is also possible to transmit torque simultaneously with the two electric machines operating simultaneously, so that shaft S2 transmits torque to one input of the epicyclic gear train via the torque passing from the two intermediate shafts to wheels 1 and 2.

Evidently, it is also possible to operate both electric machines so as to perform gear shifts in succession, ensuring drive torque to the differential during the same gear shifts in the two transmission branches, implementing the function commonly referred to as "hiddenshift" as long as only the CL2 and CL3 controls are operated, while leaving the CL1 control stable in the gear engagement position.

If the selector devices are of the clutch type, then a torque value can be guaranteed available to the wheels and therefore to the vehicle's traction during successive gear changes between the same or two electric machines, implementing the function commonly referred to as "power shift" with the same limitations between the controls described above.

It is worth noting that the second selector device CL2 (and CL3) can be hybrid, that is, composed of a combination of an absolute clutch with friction cones and a non-absolute dog-clutch quick-release clutch with front or radial teeth. In other words, the same selector device, on one side, is able to lock a wheel or hub onto a respective shaft using a dog clutch, creating a non-absolute engagement, while on the opposite side it is equipped with cones with friction material to lock a wheel or hub, creating an absolute engagement. This may depend on whether or not the elements to be interconnected can be synchronized with each other by synchronizing the rotations of the electric machine.

Figures 4 and 5 each present several elements of differentiation compared to the variants of figures 1 - 3. Each of these differences can be considered independently of the represented set. This is to limit the number of attached figures.

Figure 4, for example, presents at least two differentiating elements. The first element concerns the solution of implementing a sliding sleeve 10, similar to the solutions in Figures 2 and 3, coaxial and internal to the shaft S2. Here, the hubs M1 and M2 have opposing teeth, i.e., external and internal respectively, as in Figure 1, and therefore, the sliding sleeve 10 supports an internal toothing D and an external toothing D, to selectively mesh with the hubs M1 and M2.

This sliding sleeve 10 is rotatably connected to the hollow shaft S2 by means of a splined coupling, so that the sliding sleeve is internal to the shaft S2.

Another differentiating element compared to the variants in Figures 1-3 is that the crankshaft, rather than supporting a pinion P that meshes with an input gear IN of the primary shaft S3, itself defines a gearbox shaft by supporting pinions 5 and 6 that meshes with gears 3 and 4 on shaft S3. Gears 3 and 4, as above, are selectively fixed to rotation with shaft S3 by means of the selection device CL2.

Shaft S3 includes an output gear OUT that meshes with gear 1 integral with shaft S2, having the same characteristics as the solutions in Figures 2 and 3, with the sole exception that only the first gear 1 is connected to shaft S2, but not the second gear 2.

Figure 5 shows a variant of the solution in Figure 4, which includes a second electric machine E2. For this variant, the same principles and functional characteristics described for the variant in Figure 3 can be applied. Specifically, four or eight transmission ratios and all the operating conditions described above can be achieved.

It is worth noting that for the sake of brevity, the features common to the variants described previously have not been recalled for all variants; these can be deduced directly from a comparison of the attached drawings. Preferably, the DIF differential is equipped with a DK locking device capable of preventing the two axle shafts supported by the differential from rotating at different speeds by locking the axle shafts integrally with the differential housing. This lock function is used when one of the two wheels is in low-grip conditions, for example due to ice or mud, etc., to transfer torque to the opposite wheel with grip, thus allowing the vehicle to regain traction.

The DK differential lock may comprise, for example, a sliding sleeve MS coupled to a wheel R1, fixed to the axle shaft HS, by means of a splined coupling, equipped with teeth that reversibly engage an M4 hub, integral with the differential housing.

Furthermore, the two electric motors may be the same or different in terms of torque/power, type, and overall dimensions.

Furthermore, the energy regeneration function can be implemented by recovering kinetic energy during braking, making the electric motor function as an electrical generator. The amount of recoverable energy can be adjusted both by controlling the electric motors and by controlling their mechanical connection to the differential via the CL selection devices.

The sailing function can also be implemented, which involves disconnecting the first CL1 selection device while driving when the accelerator pedal of both electric motors is released, thus reducing mechanical losses due to dragging of the transmission components.

Finally, a vehicle towing function can be implemented, in which both electric motors are disconnected from the differential, thus allowing easier towing of the vehicle without the rotation of the electric motors and with a more limited number of rotating transmission components.

By disconnecting just one of the electric motors, the traction continuity function can also be achieved in the event of a failed engine, towing the vehicle with the surviving engine, which is particularly useful in military or rescue vehicles.

Variants to the non-limiting example described are possible, without departing from the scope of protection of the present invention, including all embodiments that are equivalent to the claims for a person skilled in the art. From the above description, a person skilled in the art is able to implement the object of the invention without introducing further construction details.

## Claims

1. Electric power axle (EA) for an industrial or commercial vehicle comprising:
- a differential (DIF) equipped with an input port and half-shafts (HS) to rotate corresponding vehicle wheels (W),
- a first electric machine (EM1, EM2) having a drive shaft (SM, SM'),
- a transmission comprising:
+ a planetary gear train (PG) coaxial with said half-shafts (HS) and comprising a single output port (SC) coinciding with said input port of the differential, a first input port (M1, S) and a second input port (M2, SC) selectively connectable to
+ a first shaft (S2) hollow and coaxial with said half-shafts (HS),
wherein said first and second input ports are selectively connectable to said first shaft (S2) by means of a first selection device (CL1) and wherein said first shaft (S2) is connectable to said drive shaft (SM, SM') by means of a second selection device (CL2, CL3).

2. Axle according to claim 1, wherein the first (CL1) and/or second selection device (CL2) is
- a non-absolute dog-clutch quick-release coupling with front or radial teeth for selectively engaging two wheels or two hubs defining two gears,
- an absolute type, with friction cones,
- or a combination of an absolute and non-absolute type clutch on opposite faces of the selection device.

3. Axle according to claim 1 or 2, wherein said first shaft (S2) is connectable to said drive shaft (SM, SM') by means of a second selection device (CL2, CL3) belonging to a transmission (T) interposed between said first shaft and said drive shaft.

4. Axle according to claim 3, wherein said transmission (T) comprises a second transmission shaft (S3, S4) operatively connected to said drive shaft (SM, SM') and wherein the first shaft is equipped with a pair of fixed secondary wheels (1, 2) that rotate with the first shaft (S2) and wherein the second shaft (S3, S4) comprises a pair of primary wheels (3, 4) that can be selectively connected for rotation with the second shaft (S3, S4) by means of said second selection device (CL2, CL3) and wherein the pair of primary wheels meshes with the pair of secondary wheels.

5. Axle according to claim 4, wherein said second shaft (S3, S4) comprises an input wheel (IN) and the electric machine comprises a pinion (P, P') keyed to a related drive shaft (SM, SM'), and wherein the pinion is arranged to mesh with said input wheel.

6. Axle according to claim 5, wherein said input wheel (IN) and said pinion (P, P') lie in a plane of arrangement (K) and wherein in a first half-space identified by the plane of arrangement (K) are housed said pairs of primary and secondary wheels and said first electric machine.

7. Axle according to claim 5, wherein said input wheel (IN) and said pinion (P) lie in a plane of arrangement (K) and wherein in a first half-space identified by the plane of arrangement (K) are housed said pairs of primary and secondary wheels and in a second half-space, opposite to the first one, is housed said first electric machine.

8. Axle according to any of claims 1 - 4, further comprising a second drive shaft (S3) coaxially connected to the drive shaft (SM, SM') of said first electric machine (EM1, EM2).

9. Axle according to any of claims 1 - 3, further comprising a second shaft (S3) and wherein said drive shaft (SM, SM') supports a first and a second primary wheel (5, 6) and said second shaft comprises a first and a second secondary wheel (3, 4) wherein each of said first and second primary wheels meshes with a respective secondary wheel, and wherein the first and second secondary wheels are selectively connectable to the second shaft (S3) by means of said second selection device (CL2, CL3).

10. Axle according to claim 98, wherein the first shaft (S2) comprises an input gear (1) fixed to the first shaft (S2) and the second shaft (S3) comprises an output gear (OUT) fixed to the second shaft (S3, S4), and wherein the input gear meshes with the output gear.

11. Axle according to any of the preceding claims, wherein a sun gear (S) defines said first port of the epicyclic gear train and a planet carrier (SC) defines said second port of the epicyclic gear train.

12. An axle according to any of the preceding claims 1-11, wherein said first selection device (CL1) comprises
- a first hub (M1) fixed to said sun gear (S),
- a second hub (M2) fixed to said planet carrier (SC),
- a sliding sleeve (10) with at least one set of teeth (D) equipped with at least one set of teeth (D) capable of selectively engaging said first and second hubs.

13. An axle according to claim 12, wherein said sliding sleeve is equipped with a first set of teeth and a second set of teeth, internal and external respectively.

14. An axle according to any of claims 12 or 13, wherein the sliding sleeve is associated with the first shaft (S2) by means of a splined coupling.

15. Axle according to claim 14, wherein the first shaft (S2) is equipped with a third hub (M3) and wherein the sliding sleeve is associated with the third hub (M3), wherein the sliding sleeve is equipped with internal splined teeth, the third hub is equipped with external splined teeth, and wherein the sliding sleeve is integral with a control collar (C1), interposed axially between the first shaft (S2) and the epicyclic gear train (PG).

16. Axle according to claim 14, wherein said sliding sleeve is internal and coaxial with the first shaft (S2) and coupled to the first shaft (S2) by means of a splined coupling, and wherein a control collar (C1) of the sliding sleeve is in a proximal position to a first vehicular wheel, opposite to a second vehicular wheel, wherein the differential is in a proximal position with respect to the second vehicular wheel.

17. An axle according to any of claims 1 to 16, further comprising a second electric machine (E2) operatively connected to said first shaft (S2) by means of a respective third shaft (S4) similar to said second shaft (S3) and preferably identical to said second shaft (S3).

18. An axle according to any of the preceding claims, wherein said differential (DIF) is equipped with a locking device (DK) arranged to rotate the half-shafts (HS) together.

19. An industrial or commercial vehicle comprising an electric axle according to any of claims 1 to 18.
